# EUROPEAN PATENT APPLICATION

(11) **EP 1 921 620 A1**
(43) Date of publication of application: **14.05.2008**
(21) Application number: 07000913.9
(22) Date of filing: 17.01.2007
(51) Int. Cl.: G11B 20/10, H04N 5/76

(54) **Systems and methods for playing back data from a circular buffer by utilizing embedded timestamp information**

(30) Priority: 08.11.2006 US 557948
(71) Applicant: MediaTek Inc., 1st Science-Based Industrial Park Hsin-Chu 300 (TW)
(72) Inventor: Chung, Tsung-Ning, Sinyi District Taipei City (TW); Chen, Jaan-Huei, San-Chung City Taipei Hsien (TW)
(74) Representative: Schaeberle, Steffen

(57) **Abstract**

A system for playing back data from a circular buffer is disclosed. The system includes: a buffer, for buffering data, wherein the data is encoded and grouped into Data Units (DUs), each containing an embedded timestamp; a buffer access module, for utilizing a write pointer to record data to the buffer, and for utilizing a read pointer to play back data from the buffer, wherein a DU pointed to by the write pointer corresponds to a current timestamp; and a computing unit, for comparing a timestamp pointed to by the read pointer with the current timestamp, and utilizing the comparison result to determine the validity of playing back data indicated by the read pointer.

## Description

This invention relates to a disc recording system and method capable of playing back data from a circular buffer with a time-shift function, according to the pre-characterizing clauses of claims 1 and 9 respectively.

Modern television displaying devices have a function known as time-shift, wherein a television signal is first recorded to a buffer and then played back from the buffer for displaying. In this way, a user can suspend playback for a certain period of time, and restart playback from the same point without losing any information. This function is beneficial when an unexpected event, such as a phone call, interrupts the user during a television program. The user can also search in the buffer for replaying data that has already been displayed. This function is known as a time-shift operation.

In general, a circular buffer (i.e. a ring buffer) is used for enabling time-shift functions. Data is recorded circularly, so when the circular buffer is full, i.e. the newest data (the head) of the circular buffer reaches the oldest data (the tail) of the circular buffer, the newest data will be recorded over the oldest data. Obviously, the oldest data that can be displayed is limited by the size of the circular buffer.

Buffer access occurs when data is written to the buffer and when data is read from the buffer. These operations may occur simultaneously or separately. If a write operation is paused while a read operation continues, eventually a point will be reached in the buffer that contains no new data. If the read operation is paused while the write operation continues, data that has not yet been displayed will be written over. It is therefore necessary to synchronize the read and write operations when realizing the time-shift function.

Conventional systems use a synchronization module to maintain validity of the read and write operations. A write module moves a write pointer for recording data to the buffer and a read module moves a read pointer for reading data from the buffer. The synchronization module is coupled to both the read module and the write module. The synchronization module is able to selectively block the read pointer or the write pointer, according to the position of the other pointer. Please note that the synchronization module may be a hardware device or firmware codes.

Constant synchronization of the read and write operations requires heavy overhead, however. It would be an advantage if this overhead could be reduced.

This is mind, the invention aims at providing a system that does not entail the synchronization overhead and related method thereof.

This is achieved by a system comprising: a buffer; a buffer access module; and a computing unit, according to Claim 1.

This is further achieved by a method comprising: buffering data in a buffer; providing a write pointer; providing a read pointer; comparing a timestamp; and utilizing the comparison result to determine the validity of playing back data according to Claim 9.

As will be seen more clearly from the detailed description below, the buffer further comprises data encoded and grouped into Data Units (DUs), where each DU contains an embedded timestamp.

In the following, the invention is further illustrated by way of example, taking reference to the following drawings. Thereof:

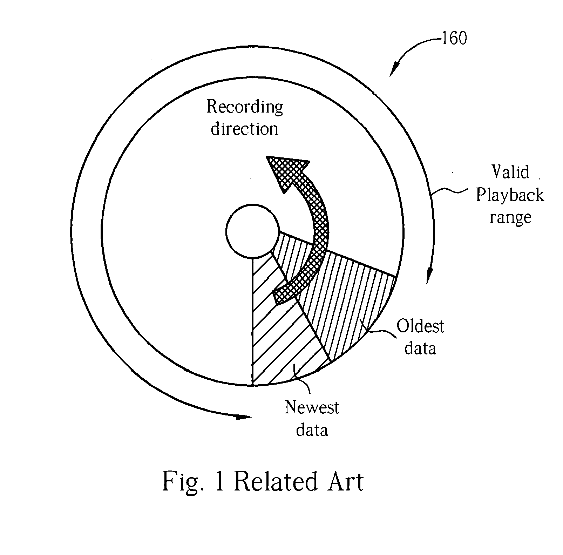

Fig.1 is a diagram of demonstrating a circular buffer;
Fig.2 is a diagram of a data playback system according to an embodiment of the present invention; and
Fig.3 is a diagram of a circular buffer shown in Fig.2.

The present invention provides a system for reading from and recording to a circular buffer that does not require a related art synchronization module.

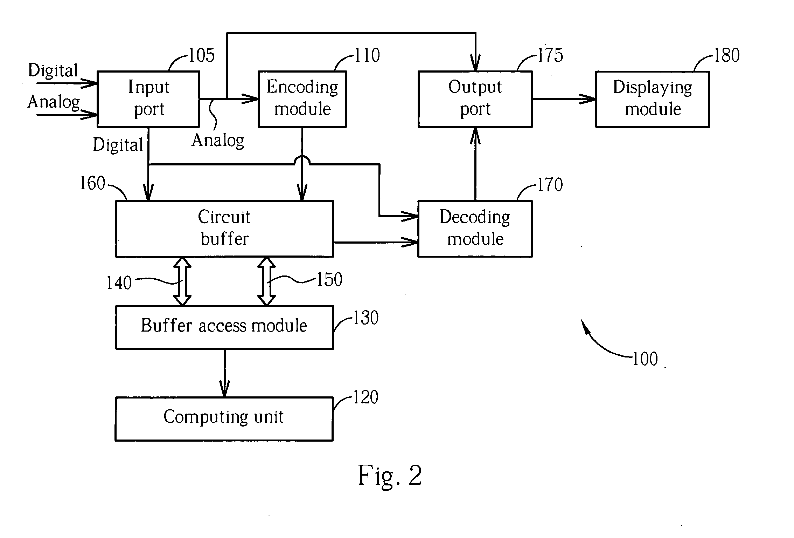

Please refer to Fig.2. Fig.2 is a diagram of a data playback system 100 according to an embodiment of the present invention. The data playback system 100 comprises an encoding module 110, a computing unit such as a central processing unit (CPU) 120, an input port 105, a buffer access module 130, a write pointer 140, a read pointer 150, a circular buffer (i.e. a ring buffer) 160, a decoding module 170, an output port 175, and a displaying module 180. The buffer access module 130 further comprises a read module and a write module (not shown). The encoding module 110 receives and compresses an analog data stream, digitalizing the data stream and packetizing it into Data Units (DUs). If the data stream is a digital data stream, however, the stream is unpacked by the input port 105, assembled into elementary streams, then re-packed into program streams and passed directly to the circular buffer 160. The buffer access module 130 utilizes the read pointer 1 50 and the write pointer 140 for accessing the circular buffer 160 to perform read and write operations respectively. Since the read module and write module are well-known components, further description is omitted for brevity. For an analog data stream, if the time-shift playback function is not activated, the data stream will be passed directly to the output port 175, and then sent to the displaying module 180. For a digital data stream the output must be in analog form, so the data stream is passed to the decoding module 170 for digital-to-analog conversion, before being sent to the output port 175.

The data stream output by the encoding module 110 in analog cases and output by the input port 105 in digital cases contains a plurality of data units (DUs), which are known as Video Object Units (VOBUs) in DVD-Video specification, or Groups of Pictures (GOPs) in MPEG-2 specification. DUs contain information referencing other DUs to enable searching for a particular DU. For example, each DU may have a header carrying data length information, and the position of a next DU may be located according to the data length information. In some embodiments, each DU contains a navigation pack (NV) at the beginning of the DU (such as a VOBU) that contains various information relating to the specific data unit. The encoding module 1 10 and CPU 120 embed a timestamp in each DU, for example, embedded in the navigation pack during the encoding process. Each time the buffer access module 130 accesses the circular buffer 160 for either a read operation or a write operation, the buffer access module 130 will determine the timestamp information of a DU to be written to or read from the circular buffer 160. Please note that as a read operation and a write operation can occur simultaneously, the timestamp of a DU to be written to the circular buffer 160 and the timestamp of a DU to be read from the circular buffer 160 can be determined simultaneously.

The position of the write pointer 140 is called the buffer head. The buffer tail is an area of the circular buffer 160 that contains the earliest recorded VOBU. Each time the write pointer 140 indicates an area of the circular buffer 160 for recording a new DU, a current timestamp will be embedded in the DU and recorded to the circular buffer 160. When the read pointer 150 indicates an area of the circular buffer 160, the buffer access module 130 will read the DU that the read pointer 1 50 indicates, and determine data validity by checking the embedded timestamp of the DU. This process occurs each time a DU is read.

If a user wishes to play back data that has already been recorded over (i.e. overwritten), the system 100 will need to inform the user that the operation cannot occur. If the user wishes to advance the read pointer 1 50 to a point that approaches the write pointer 140, the system 100 will also not allow this operation. Furthermore, if the read pointer 150 is paused and the write pointer 140 starts to approach the read pointer 1 50, the read pointer 1 50 must be moved along with the write pointer 140 to indicate the position of the oldest data. In other words, the buffer 160 has a valid playback range, which is determined by a pre-set time-shift period. By embedding the timestamp in each DU, the system 100 can constantly check if the read pointer 150position lies in the valid playback range, and utilize this information to control the read pointer 1 50. The timestamp information may be embedded during encoding, and is added by the encoding module 110 and the CPU 120. In one embodiment of the disclosed system 100, the timestamp is only embedded after a user has activated the time-shift function of the system 100, i.e. when the encoded data stream is sent to the buffer access module 130 rather than directly to the displaying module 170. In another embodiment, the timestamp information is continuously embedded, regardless of whether the encoded data stream is stored in the circular buffer 160 or directly sent to the displaying module 170. Both embodiments lie within the scope of the present invention. Furthermore, the timestamp information can be discarded at a decoding stage, or at a later stage.

When a read operation occurs, i.e. when data is played back from the circular buffer 160, the buffer access module 130 will move the read pointer 1 50 to a DU in the circular buffer 160 that is requested by the CPU 120, and reads the timestamp information of the indicated DU. Please note that, in this embodiment, a write operation is continuously occurring, so the buffer access module 130 continuously records the DU in the circular buffer 160. The CPU 120 then compares a current timestamp with the timestamp indicated by the read pointer 1 50. If the timestamp indicated by the read pointer 1 50 (herein called the read timestamp) is too close to the current timestamp, the read operation will be determined as invalid. For example, when the read timestamp specifies a later time than the current timestamp, or when the read timestamp approaches the current timestamp, the head of the circular buffer 160 is reached and playback should be paused, paused then resumed at normal playback speed, or switched to live video. In some embodiments, the total length of video that can be stored in the circular buffer 160 is defined by a preset time shift period (for example, 1 hour), whereas in some other embodiments, the storage capacity of the circular buffer 160 determines the maximum duration for buffering video. In the first case, a valid playback range of the circular buffer 160 can be determined based on the current timestamp and the preset time shift period. The CPU 120 can therefore utilize the current timestamp and the tail timestamp to determine a valid playback range of the circular buffer 160. The tail timestamp can be used to provide the valid recorded length or valid time search range for users. However, the valid range may be tested by checking the read timestamp and the current timestamp when reading a DU. Please note that this range can be altered depending on design requirements or encoding rates, but must always be less than the total size of the circular buffer 160. The valid playback range can be used for time search, so if a target timestamp falls in the range, the playback operation can be executed. The valid time search range can be also acquired by the current timestamp and the pre-set time-shift period. If a target timestamp is not in the range, or if the difference between the current timestamp and target timestamp exceeds the preset time shift period or a total recording period, it is an invalid timestamp and the operation should be forbidden.

When the user wishes to view the content stored in the circular buffer 160 and forward the buffered video, the system will check if the read timestamp is too close to the current timestamp, i.e. the read pointer 1 50 lies too close to the buffer head and will overtake the write pointer 140, the forward or read operation will be deemed invalid. The playback may be paused and the system may shift to watch real-time video. The playback can also be paused for a short time, then resumed at normal playback speed.

When the user wishes to view the content stored in the circular buffer 160 and backward the buffered video, the system will check for data validity by comparing the difference between the read timestamp and current timestamp with the preset time shift period or the total recording period. If the difference exceeds the preset time shift period or total recording period, the buffer tail is reached and normal playback should be resumed. When the user pauses viewing the content stored in the circular buffer 160, the system will check the difference between the current timestamp and read timestamp, and if the difference exceeds the preset time shift period, the write pointer has reached the read pointer, which means the buffer tail is touching the read pointer, and the DU pointed by the read pointer will soon be overwritten. The output should be unfrozen forcibly by controlling the read pointer to move along with the buffer tail so that the read pointer points to the DU with an oldest timestamp within the valid playback range. Control of the write pointer 140 is independent of the read pointer 150 - in other words no synchronization between the two pointers is required. Furthermore, in some embodiments it is possible that the write pointer 140 does not require any control, and moves at a steady rate. This further reduces the overhead of the system 100. As the write pointer 140 is not controlled in this embodiment, the write pointer 140 will proceed to write data to the circular buffer 160 in a circular fashion. The CPU 120 only needs to control the movement of the read pointer 1 50 in order to ensure that data access operations are allowed.

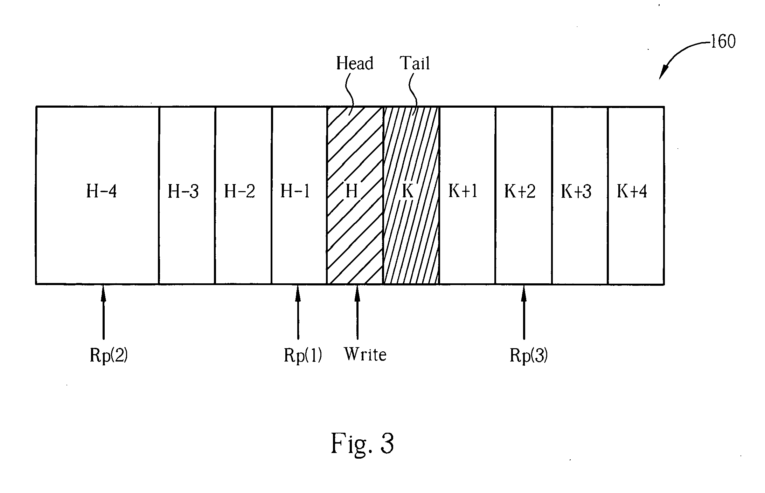

Please refer to Fig.3. Fig.3 is a diagram of the circular buffer 160 shown in Fig.2, and illustrates various read and write operations for demonstrating more clearly the method of the present invention. Please note that more than one read pointer is illustrated in Fig.3 for ease of description, however, this is not a limitation of the present invention, and the invention can also be used to control only one read pointer and one write pointer. Generally, when the time-shift function is activated, the read pointer will initially point to a few data units behind the DU indicated by the write pointer. The user can then perform various time shift operations such as move forward, move backward, pause, and time search. Each operation will be described in more detail herein with reference to Fig.3.

The circular buffer 160 in the diagram comprises 10 data units (H-4, H-3, H-2, H-1, H, K, K+1, K+2, K+3, K+4), each containing a VOBU. The buffer head is initially at H, and the buffer tail is initially at K. Please note that as the circular buffer 160 is full, the buffer head will always be the data unit following the buffer tail. Furthermore, a read pointer can only read from a data unit previous to the write pointer. Please note the data length of each VOBU is not required to be the same and these numbers are merely used as examples in this embodiment and are not limitations of the present invention.

Move forward: the user wishes to advance the read pointer Rp(1). As the timestamp indicated by the read pointer Rp(1) is too close to the current timestamp, the read pointer Rp(1) will be paused, because the buffer head is reached and no more new data can be read. The read pointer Rp(1) is therefore paused at data unit H-1. The read pointer can also be paused then playback resumed after a short time, or the system can be switched to play live video (i.e. the time-shift playback function is exited.)

Move backward: the user wishes to view data that has already been played, by moving read pointer Rp(2) backwards. If the read timestamp indicates it is too close to the buffer tail, the next data read from the buffer might be the newest data since the old data has been overwritten. However, it is not necessary for the system to buffer the tail timestamp; for example, when the read pointer is moving backward, the read timestamp should decrease gradually. Once a DU having a larger timestamp than the currently read timestamp is encountered, the tail is touched. For example, the user wishes to move Rp(2) backward. When Rp(2) moves to K and the user keeps going backward, the system should notify the user that data in K is the oldest data and thus further backward operation cannot be performed. Another way to check whether the tail is reached is by examining the difference between the read timestamp and the current timestamp, if the difference is larger than the preset time shift period or the total recording period, or if the read timestamp is not in the valid playback range, the data operation will therefore be deemed invalid.

Pause: If a playback operation has been paused by the system or by the user, because the circular buffer 160 is implemented to record incoming data, the read pointer can only be paused for a certain amount of time before it will be overwritten by the write pointer. Therefore, when the difference between the current timestamp (which is constantly changing as the write pointer steadily writes data to the buffer) and the read timestamp (which is static since the playback is paused) equals the preset time shift period, the read pointer will be unfrozen by the buffer access module 130. At present, read pointer Rp(3) is paused at data unit K+2. When the write pointer indicates that data buffering overwrites data units K~K+2 with new data, the read pointer Rp(3) will lie outside the valid playback range and will therefore be unfrozen to move forward.

Time search: Time search can move a read pointer forwards or backwards in the circular buffer 160, but utilizes a time parameter to do so. The time parameter is entered by the user. If the difference between the target timestamp and the current timestamp is larger than the preset time shift period or total recording period, then the operation will be forbidden.

As the movement of the write pointer 140 is not controlled by the buffer access module 130, there is no need to synchronize the movement of the write pointer 140 with the movement of the read pointer 150, considerably reducing the overhead of the system 100. Furthermore, by embedding the timestamp into each data unit, accurate timing information can be obtained and compared, enabling it to quickly and accurately determine whether or not read operations are valid. In some embodiments, the system controls whether to output the data to a display, a playback, or a decoding device based on the validity of the read operation. In other words, the system determines whether to output the buffered data according to the comparison result of the current timestamp (or the system timestamp) and the read timestamp (or the target timestamp).

A further advantage of the system 100 is that, as operations of the read pointer 1 50 and the write pointer 140 are independent from each other, the present invention can enable a system that utilizes two CPUs, wherein a first CPU controls the read pointer 150 and a second CPU controls the write pointer 140. This supports a system where the read and write operations have different access times. In short, the disclosed invention has the advantages of less overhead and more flexibility than the related art.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A system (100) for playing back data, **characterized by**:
a buffer (160), for buffering data, **characterized in that** the data is encoded and grouped into Data Units (DUs), and each DU contains an embedded timestamp;
a buffer access module (130), coupled to the buffer (160), for utilizing a write pointer (140) to record data to the buffer (160), and for utilizing a read pointer (150) to play back data from the buffer (160), **characterized in that** a DU pointed to by the write pointer (140) corresponds to a current timestamp; and
a computing unit (120), coupled to the buffer access module (130), for comparing a timestamp pointed to by the read pointer (1 50) with the current timestamp, and utilizing the comparison result to determine the validity of playing back data indicated by the read pointer (150).

2. The system (100) of claim 1, **characterized in that** if playing back data indicated by the read pointer (150) is determined to be invalid, the computing unit (120) pauses or moves the read pointer (150).

3. The system (100) of claim 1, **characterized in that** the movement of the write pointer (140) proceeds at a steady rate.

4. The system (100) of claim 1, **characterized in that** the comparison result is compared with a preset time shift period, and if the comparison result exceeds the preset time shift period playing back data indicated by the read pointer (1 50) is determined to be invalid.

5. The system (100) of claim 4, **characterized in that** if the movement of the read pointer (150) is moving backward and playing back data indicated by the read pointer (150) is determined to be invalid the computing unit (120) pauses the read pointer (150).

6. The system (100) of claim 4, **characterized in that** if the movement of the read pointer (150) is currently paused and playing back data indicated by the read pointer (150) is determined to be invalid the computing unit (120) moves the read pointer (150) forward.

7. The system (100) of claim 4, **characterized in that** the maximum data length of the data to be played in the preset time shift period is not greater than the size of the buffer (160).

8. The system (100) of claim 1, **characterized in that** the computing unit (120) further instructs the buffer access module (130) to control the read pointer (150) to search for a target timestamp according to a user command, and if the comparison result is larger than a preset time shift period, the searching operation is determined to be invalid.

9. A method for playing back data, **characterized by**:
buffering data in a buffer (160), **characterized in that** the data is encoded and grouped into Data Units (DUs), and each DU contains an embedded timestamp;
providing a write pointer (140) for writing data to the buffer (160),
**characterized in that** a DU pointed to by the write pointer (140) corresponds to a current timestamp;
providing a read pointer (150) for playing back data from the buffer (160);
comparing a timestamp pointed to by the read pointer (150) with the current timestamp; and
utilizing the comparison result to determine the validity of playing back data indicated by the read pointer (150).

10. The method of claim 9, **characterized in that** if playing back data indicated by the read pointer (150) is determined to be invalid, the method is further **characterized by**:
pausing or moving the read pointer (150).

11. The method of claim 9, **characterized in that** the movement of the write pointer (140) proceeds at a steady rate.

12. The method of claim 9, **characterized in that** the step of utilizing the comparison result to determine the validity of playing back data indicated by the read pointer (150) is further **characterized by**:
comparing the comparison result with a preset time shift period;
**characterized in that** if the comparison result exceeds the preset time shift period, playing back data indicated by the read pointer (150) is determined to be invalid..

13. The method of claim 12, **characterized in that** if movement of the read pointer (150) is moving backward and playing back data indicated by the read pointer (150) is determined to be invalid, the method further comprises pausing the read pointer (150) or moving the read pointer (150) forward.

14. The method of claim 12, **characterized in that** if the movement of the read pointer (150) is currently paused and playing back data indicated by the read pointer (150) is determined to be invalid, the method further comprises moving the read pointer (150) forward.

15. The method of claim 12 **characterized in that** the maximum data length of the data to be played in the preset time shift period is not greater than the size of the buffer (160).

16. The method of claim 9, **characterized in that** the step of providing the read pointer (150) for playing back data from the buffer (160) is further **characterized by**:
controlling the read pointer (150) to search for a target timestamp according to a user command;
and the step of utilizing the comparison result to determine the validity of playing back data indicated by the read pointer (150) is further **characterized by**:
determining the search operation to be invalid if the comparison result is larger than a preset time shift period.

## Amended claims

### Amended claims in accordance with Rule 137(2) EPC.

**1.** A system (100) for playing back data, comprising:
a buffer (160), for buffering data, wherein the data is encoded and grouped into Data Units (DUs), and each DU contains an embedded timestamp;
a buffer access module (130), coupled to the buffer (160), for utilizing a write pointer (140) to record data to the buffer (160), and for utilizing a read pointer (150) to play back data from the buffer (160), wherein a DU pointed to by the write pointer (140) corresponds to a current timestamp; **characterized by**:
a computing unit (120), coupled to the buffer access module (130), for comparing a timestamp pointed to by the read pointer (150) with the current timestamp, and utilizing the comparison result to determine the validity of playing back data indicated by the read pointer (150).

**2.** The system (100) of claim 1, **characterized in that** if playing back data indicated by the read pointer (150) is determined to be invalid, the computing unit (120) pauses or moves the read pointer (150).

**3.** The system (100) of claim 1, **characterized in that** the movement of the write pointer (140) proceeds at a steady rate:

**4.** The system (100) of claim 1, **characterized in that** the comparison result is compared with a preset time shift period, and if the comparison result exceeds the preset time shift period playing back data indicated by the read pointer (150) is determined to be invalid.

**5.** The system (100) of claim 4, **characterized in that** if the movement of the read pointer (150) is moving backward and playing back data indicated by the read pointer (150) is determined to be invalid the computing unit (120) pauses the read pointer (150).

**6.** The system (100) of claim 4, **characterized in that** if the movement of the read pointer (150) is currently paused and playing back data indicated by the read pointer (150) is determined to be invalid the computing unit (120) moves the read pointer (150) forward.

**7.** The system (100) of claim 4, **characterized in that** the maximum data length of the data to be played in the preset time shift period is not greater than the size of the buffer (160).

**8.** The system (100) of claim 1, **characterized in that** the computing unit (120) further instructs the buffer access module (130) to control the read pointer (150) to search for a target timestamp according to a user command, and if the comparison result is larger than a preset time shift period, the searching operation is determined to be invalid.

**9.** A method for playing back data, comprising the steps:
buffering data in a buffer (160), wherein the data is encoded and grouped
into Data Units (DUs), and each DU contains an embedded timestamp;
providing a write pointer (140) for writing data to the buffer (160), wherein a DU pointed to by the write pointer (140) corresponds to a current timestamp; and
providing a read pointer (150) for playing back data from the buffer (160);
**characterized by** the steps:
comparing a timestamp pointed to by the read pointer (150) with the current timestamp; and
utilizing the comparison result to determine the validity of playing back data indicated by the read pointer (150).

**10.** The method of claim 9, **characterized in that** if playing back data indicated by the read pointer (150) is determined to be invalid, the method is further **characterized by**:
pausing or moving the read pointer (150).

**11.** The method of claim 9, **characterized in that** the movement of the write pointer (140) proceeds at a steady rate.

**12.** The method of claim 9, **characterized in that** the step of utilizing the comparison result to determine the validity of playing back data indicated by the read pointer (150) is further **characterized by**:
comparing the comparison result with a preset time shift period;
**characterized in that** if the comparison result exceeds the preset time shift period, playing back data indicated by the read pointer (150) is determined to be invalid.

**13.** The method of claim 12, **characterized in that** if movement of the read pointer (1 50) is moving backward and playing back data indicated by the read pointer (150) is determined to be invalid, the method further comprises pausing the read pointer (150) or moving the read pointer (150) forward.

**14.** The method of claim 12, **characterized in that** if the movement of the read pointer (150) is currently paused and playing back data indicated by the read pointer (150) is determined to be invalid, the method further comprises moving the read pointer (150) forward.

**15.** The method of claim 12 **characterized in that** the maximum data- length of the data to be played in the preset time shift period is not greater than the size of the buffer (160).

**16.** The method of claim 9, **characterized in that** the step of providing the read pointer (150) for playing back data from the buffer (160) is further
**characterized by:**
controlling the read pointer (150) to search for a target timestamp according to a user command;
and the step of utilizing the comparison result to determine the validity of playing back data indicated by the read pointer (150) is further **characterized by**:
determining the search operation to be invalid if the comparison result is larger than a preset time shift period.
pointer for reading data from the buffer. The synchronization module is coupled to both the read module and the write module. The synchronization module is able to selectively block the read pointer or the write pointer, according to the position of the other pointer. Please note that the synchronization module may be a hardware device or firmware codes.
Constant synchronization of the read and write operations requires heavy overhead, however. It would be an advantage if this overhead could be reduced.
CISCO: "Why Do Some Cable Modems Display a Negative Time Offset?", XP-002434634 deals with the reasons why the time offset of a cable modem, also known as the ranging offset, which is a value indicating the roundtrip delay between a cable modem determination system (CMTS) and a connected cable modem, can have a negative time offset and indicates that the cable modem vendors are responsible for actually fixing the negative timing offset issue by supplying user revisions of cable modem firmware. It is disclosed that the CMTS comprises a system timestamp and that the cable modem also comprises a system timestamp. In the give examples time lines of these timestamps are started at 0 and imaginary time units are used. Described is in particular a mechanism how to synchronize the two clocks of the CMTS and the cable modem by exchanging synchronization messages and
